Europäisches Patentamt

(19) **European Patent Office**

**Office européen des brevets**

(11) Numéro de publication: **0 186 584**
**B1**

(12) **FASCICULE DE BREVET EUROPÉEN**

(45) Date de publication du fascicule du brevet:
28.02.90

(51) Int. Cl.⁵: **G 01 F 23/26, G 01 N 27/02**

(21) Numéro de dépôt: **85402540.0**

(22) Date de depôt: **18.12.85**

(54) Dispositif de détection d'un matériau conducteur de l'électricité contenu dans une enveloppe et applications de ce dispositif.

(30) Priorité: **27.12.84 FR 8419932**

(43) Date de publication de la demande:
**02.07.86 Bulletin 86/27**

(45) Mention de la délivrance du brevet:
**28.02.90 Bulletin 90/09**

(84) Etats contractants désignés:
**DE GB IT**

(56) Documents cité:
**EP-A-0 107 545**
**FR-A-2 251 008**
**FR-A-2 253 206**
**FR-A-2 490 339**

(73) Titulaire: **NOVATOME**
**La Boursidière R.N. 186**
**F-92357 Le Plessis Robinson (FR)**

(72) Inventeur: **Logeais, Gilles**
**1 Square des Peupliers**
**F-92350 Le Plessis Robinson (FR)**
Inventeur: **Vaillant, Philippe**
**5 bis rue Antoine Chantin**
**F-75014 Paris (FR)**

(74) Mandataire: **Moncheny, Michel**
**c/o Cabinet Lavoix 2 Place d'Estienne d'Orves**
**F-75441 Paris Cedex 09 (FR)**

LIBERGRAF, STOCKHOLM 1990

## Description

L'invention concerne un dispositif de détection d'un matériau conducteur de l'électricité contenu dans une enveloppe, par couplage électromagnétique de deux bobines conductrices extérieures à cette enveloppe.

Il est connu par exemple de déterminer le niveau d'un métal liquide dans une enveloppe, par mesure d'une grandeur électrique aux bornes d'un bobinage associé à un autre bobinage alimenté en courant électrique, le couplage des deux bobinages se faisant par l'intermédiaire du métal liquide.

Pour cela, les deux bobinages doivent être plongés dans le volume intérieur de l'enveloppe, de telle sorte que le couplage des deux bobinages soi plus ou moins bon suivant le niveau de métal liquide dans l'enveloppe. Il en résulte que la grandeur électrique mesurée aux bornes du second bobinage dépend du niveau du métal liquide dans l'enveloppe, si le courant d'alimentation du premier bobinage est constant.

Dans la plupart des cas, les métaux liquides sont agressifs vis-a-vis des matériaux qui peuvent y être plongés et les bobinages doivent être protégés d'un contact direct avec le métal liquide. On dispose donc ces bobinages dans une gaine en un matériau tel que l'acier inoxydable; on peut également les introduire dans un doigt de gant solidaire de l'enveloppe et faisant saillie dans son volume interne.

La gaine ou le doigt de gant servant au logement du dispositif de mesure de niveau doit avoir une longueur importante par rapport à son diamètre pour que les mesures puissent être effectuées dans de bonnes conditions à l'intérieur de tout le volume de l'enveloppe. Ces gaines ou doigts de gant sont donc fragiles et pertubent l'écoulement du métal liquide dans le cas où l'enveloppe est une tuyautrie de circulation de ce métal. Les doigts de gant compliquent la construction des enveloppes ou tuyauteries dans lesquelles ils permettent d'effectuer des mesures.

On connaît également, par le brevet FR-A2 490 339, un appareil de mesure de niveau d'un métal liquide comportant un tube vertical ou oblique sur lequel sont bobinés des enroulements primaire et secondaire. La tension induite dans le bobinage secondaire dépend du niveau du métal liquide dans le tube, une longueur plus ou moins grande des bobinages ou un plus ou moins grand nombre de spires étant couplés par le métal liquide. Le tube de l'appareil doit être mis en communication avec le volume interne de l'enveloppe contenant le métal liquide pour qu'un niveau de métal liquide s'y établisse.

Dans le cas de canalisations dans lesquelles circule du sodium liquide, il faut donc prévoir un piquage sur la canalisation ce qui présente un grand inconvénient.

D'autre part, l'équilibre des niveaux dans la canalisation et dans l'appareil de mesure n'est pas toujours obtenu de façon parfaite. Enfin le dispositif selon l'art antérieur est assez sensible à la température du métal liquide, ce qui entraîne l'obligation de faire des corrections en fonction de cette température.

Dans le cas de tuyauteries ou récipients sensiblement cylindriques et horizontaux destinés à contenir du sodium liquide utilisés dans un réacteur nucléaire, il est nécessaire de disposer d'appareillages de mesure simples et fiables de niveau ne nécessitant pas de modifications de l'enveloppe pour leur installation. De façon plus générale, dans d'autres industrie, il peut être nécessaire de déterminer le niveau, le volume ou la présence d'un matériau conducteur dans une enveloppe ayant un axe sensiblement horizontal.

Le but de l'invention est donc de proposer un dispositif de détection d'un matériau conducteur de l'électricité contenu dans une enveloppe de forme générale cylindrique à axe sensiblement horizontal par couplage électromagnétique de deux bobines conductrices enroulées en une seule couche sur la paroi extérieure de l'enveloppe contenant le matériau conducteur, les spires d'une des bobines étant imbriquées par rapport aux spires de l'autre bobine et sensiblement jointives avec celles-ci et par mesure de la force électromotrice induite aux bornes de la seconde bobine, créée par le courant alternatif dans la première bobine et dépendant de la présence et du niveau du matériau conducteur dans l'enveloppe, dispositif qui ne comporte pas d'éléments en contact avec le matériau conducteur, qui soit fiable et d'une construction simple et qui ne nécessite pas de modification de l'enveloppe renfermant le matériau conducteur.

Dans ce but, chacune des spires de chacun des bobinages disposée dans un plan sensiblement vertical entoure le matériau conducteur contenu dans l'enveloppe, quel que soit le niveau de ce matériau dans l'enveloppe.

Afin de bien faire comprendre l'invention on va maintenant décrire à titre d'exemple non limitatif, en se référant aux figures jointes en annexe, un mode de réalisation du dispositif de mesure suivant l'invention dans le cas d'une canalisation renfermant un métal liquide tel que le sodium.

Dans ces figures :

- La Fig. 1 est une vue en coupe par un plan vertical du dispositif en position de mesure sur une canalisation de transport de sodium.
- La Fig. 2a est une vue schématique montrant la répartition des lignes de force autour des bobinages dans le cas où la canalisation est vide.
- La Fig. 2b est une vue schématique des lignes de forces dans le cas où la canalisation est pleine de métal liquide.
- La Fig. 2c est une vue schématique des lignes de forces dans le cas où la canalisation est remplie partiellement de métal liquide.

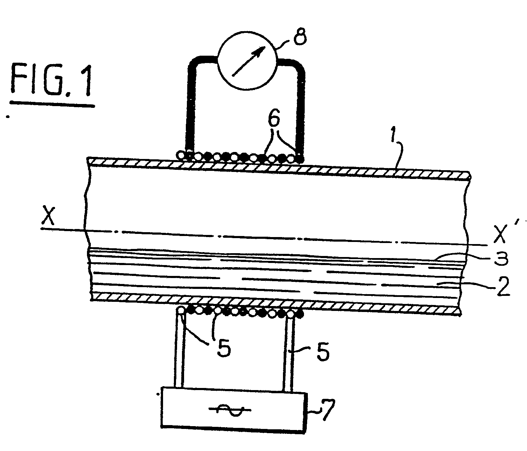

Sur la Fig. 1. on voit une canalisation 1 en acier inoxydable à l'intérieur de laquelle circule du sodium liquide 2 remplissant la canalisation 1 jusqu'au niveau 3.

Le dispositif de mesure de niveau est constitué par un premier bobinage 5 enroulé sur la surface extérieure de la canalisation 1, en une seule couche, une seconde bobine 6 également enroulée sur la surface extérieure de la canalisation 1, un moyen 7 d'alimentation en courant alternatif du premier bobinage 5 et un voltmètre 8 placé aux bornes du second bobinage 6.

L'axe XX' de la canalisation est sensiblement horizontal si bien que les spires des bobinages 5 et 6 sont dans des plans sensiblement verticaux. Ces spires entourent le sodium liquide 2 contenu dans la canalisation 1.

Les spires des bobinages 5 et 6 sont imbriquées et placées sensiblement jointives les unes par rapport aux autres.

Les extrémités du fil conducteur constituant le bobinage 5 sont reliées à un dispositif 7 d'alimentation en courant alternatif avec une intensité constante et sous une fréquence de 1000 Hertz.

Le champ magnétique créé par le bobinage 5 alimenté en courant alternatif induit une force électromotrice dans le bobinage 6, par couplage électromagnétique.

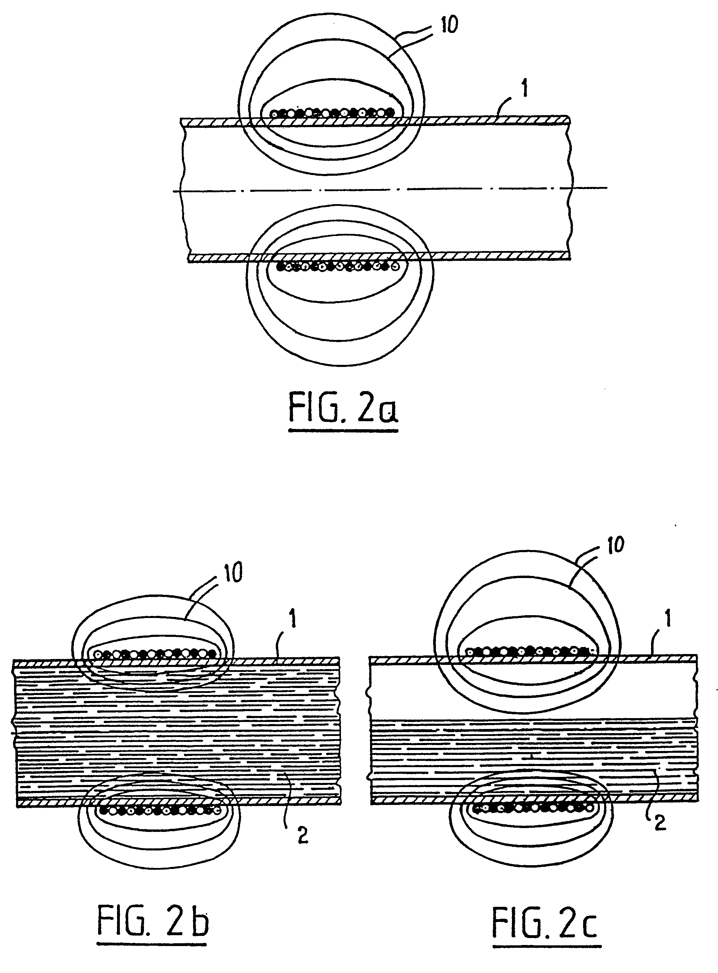

Sur les Fig. 2a, 2b et 2c, on a représenté les lignes de flux 10 autour des bobinages 5 et 6 dans le cas où la canalisation 1 est vide de métal liquide, dans le cas où le métal liquide remplit complètement la canalisation 1 et dans le cas ou le métal liquide ne remplit que partiellement la canalisation 1, respectivement.

Comme représenté sur la Fig. 2a, dans le cas ou la canalisation 1 est vide, les lignes de flux sont largement ouvertes à l'intérieur et à l'extérieur du tube et le couplage entre les bobinages 5 et 6 est faible.

Dans le cas de la Fig. 2b, les lignes de flux 10 sont fortement resserrées à l'intérieur de la canalisation remplie de métal liquide 2, ce qui produit un bon couplage entre les bobinages 5 et 6.

Enfin dans le cas de la Fig. 2c, on observe une dissymétrie très accentuée des lignes de flux, entre la partie remplie de métal liquide 2 de la canalisation et la partie vide de métal liquide. Le couplage est alors intermédiaire entre le cas de Fig. 2a et le cas de la Fig. 2b.

Corrélativement, la force électromotrice mesurée aux bornes du bobinage 6 est forte lorsque la canalisation est vide de métal liquide, faible lorsque la canalisation est pleine de métal liquide et présente une valeur intermédiaire lorsque la canalisation est partiellement remplie de métal liquide.

On a utilisé un dispositif selon l'invention pour mesurer un niveau de sodium liquide dans une tuyauterie en acier inoxydable d'un circuit expérimental d'un réacteur nucléaire à neutrons rapides. Cette tuyauterie a un diamètre extérieur de 0,273 mètre, une épaisseur de 0,00419 mètre et les bobines du dispositif de mesure de niveau ont chacune dix spires en fil conducteur électrique de $2,5 \times 10^{-6} m^2$ section.

Le premier bobinage est relié à une source d'alimentation en courant alternatif ayant une intensité constante et une fréquence de 1000 Hertz.

Aux bornes du second bobinage dont les spires sont imbriquées par rapport aux spires du premier bobinage, on place un voltmètre qui permet de mesurer la tension induite dans le second bobinage 6.

On a mesuré la tension aux bornes du bobinage 6 en utilisant le voltmètre 8, dans les cas suivants:

a     Canalisation 1 vide de métal, tension mesurée 353 mV.

b     Canalisation 1 remplie jusqu'au quart de son diamètre vertical, tension mesurée 266 mV.

c     Canalisation 1 à moitié remplie de sodium liquide, tension mesurée 226 mV.

d     Canalisation 1 entièrement remplie de sodium liquide, tension mesurée 157 mV.

On voit donc que la mesure de tension est très sensible au niveau de remplissage de la canalisation et que la valeur de cette tension mesurée décroît avec le remplissage de la canalisation.

Avec le voltmètre utilisé (amplitude totale de la graduation 500 mV), il est possible d'apprécier des variations de niveau de l'ordre de 5 mm dans la canalisation, ce qui représente une très bonne sensibilité.

Dans le cas où la mesure de niveau doit être faite sur une canalisation ou un récipient renfermant du métal liquide très chaud (par exemple du sodium liquide surchauffé à 600°C), on réalise les bobines à partir d'un conducteur coaxial à isolant minéral du type commercialisé sous la dénomination PYROTENAX.

La fréquence du courant utilisé pour alimenter la bobine 5 dépend des dimensions de l'enveloppe 1 et des conditions de mise en oeuvre de la détection (niveau du matériau à détecter). Pour un diamètre de 0,273 m et une épaisseur de $4 \cdot 10^{-3}$ m, la fréquence la plus adaptée pour une étendue de mesure de 0 à 100 % est voisine de 1000 Hertz. Cette fréquence est inversement proportionnelle au rapport de similitude des dimensions (diamètre et épaisseur) de l'enveloppe cylindrique 1. En effet, les dimensions des enveloppes cylindriques telles que les canalisations des réacteurs nucleaires varient de façon generalement proportionnelle. Ainsi pour une tuyauterie de 0,546 m, soit un rapport de similitude de 2, la fréquence ne sera que de 500 Hertz, l'épaisseur de la tuyauterie étant également dans ce rapport de similitude c'est-à-dire égale à $8 \cdot 10^{-3}$ m. Si l'on souhaite une sensibilité maximale pour de faible remplissage jusqu'à 25 % environ ou de fort remplissage à partir de 75 % la fréquence la plus adaptée sera d'environ 1600 Hertz pour une tuyauterie de 0,273 m, la même règle de similitude s'appliquant pour d'autres dimensions.

Même si le niveau est très bas dans l'enveloppe ou la canalisation dans laquelle on effectue la mesure, il y a toujours une zone du bobinage qui est, en regard du métal liquide suivant un ensemble de génératrices et sur toute la longueur du bobinage; la sensibilité du dispositif est ainsi très bonne.

Les principaux avantages du dispositif suvant l'invention sont les suivants: le dispositif est d'une très grande simplicité et ne nécessite pas de modification de l'enveloppe dans laquelle on fait la mesure, telle qu'un piquage de prise de niveau: il est d'une grande sensibilité comme indiqué plus haut; il peut être monté sur des tuyauteries de grand diamètre, par exemple d'un diamètre de l'ordre d'un mètre ou sur des réservoirs de grandes dimensions, par exemple de forme cylindrique et d'un diamètre supérieur à un mètre; le dispositif peut être facilement utilisé pour des essais car son montage et son démontage peuvent être très facilement réalisés en n'importe quel point d'un circuit de métal liquide ou d'un autre liquide conducteur électrique; le dispositif ne comporte pas de circuit magnétique et ne nécessite pas d'introduction d'éléments de mesure à l'intérieur de la tuyauterie ou du réservoir. En outre, la mesure n'est pas perturbée par les dispositifs de préchauffage ou de maintien en température du type électrique, à effet Joule, par exemple, et les variations de température du produit ne se traduisent que par de faibles variations dans la mesure qui ne nécessitent pas de correction si la précision exigée n'est pas trop grande.

L'invention ne se limite pas au mode de réalisation qui a été décrit.

C'est ainsi qu'on peut utiliser des bobinages dont le nombre de spires est différent de dix.

Le voltmètre utilisé sera choisi, bien sûr, en fonction de la sensibilité recherchée.

La section du fil conducteur constituant les bobines pourra être différente de la valeur qui a été donnée.

Le dispositif de mesure suivant l'invention peut être utilisé dans le cas de toute canalisation ou réservoir de forme cylindrique à section circulaire ou non circulaire ayant un axe sensiblement horizontal.

Les réservoirs ou canalisations peuvent être en un matériau ou alliage métallique quelconque, l'utilisation de l'acier inoxydable étant cependant la plus fréquente dans le cas de métal liquide tel que le sodium.

Le dispositif de mesure suivant l'invention peut être utilisé non seulement pour la mesure de niveau mais encore pour la mesure du volume de substances conductrices contenues dans une enceinte; dans ce cas, un simple programme de calcul ou un dispositif électronique approprié permet de convertir la mesure de niveau en mesure de volume, en prenant en compte la géométrie de l'enveloppe.

Le dispositif peut également être utilisé pour la détection de la présence d'une substance conductrice dans un réservoir ou une canalisation; dans ce cas, on peut par exemple concevoir un dispositif électronique provoquant l'émission d'un signal, lorsque la tension mesurée en continu aux bornes de l'enroulement du détecteur franchit un certain seuil.

Le matériau conducteur peut être un métal liquide quelconque, une poudre métallique ou tout autre substance non métallique conductrice de l'électricité, telle qu'un électrolyte.

L'invention peut donc s'appliquer dans le domaine de la métallurgie, de la production d'énergie et de l'industrie chimique.

**Revendications**

1. Dispositif de détection d'un matériau conducteur de l'électricité contenu dans une enveloppe (1) de forme générale cylindrique et à axe sensiblement horizontal, par couplage électromagnétique de deux bobines conductrices (5, 6), enroulées en une seule couche sur la paroi extérieure de l'enveloppe contenant le matériau conducteur, les spires d'une des bobines (5) étant imbriquées par rapport aux spires de l'autre bobine (6) et sensiblement jointives avec celles-ci, et par mesure de la force électromotrice induite aux bornes de la seconde bobine (6), créée par un courant alternatif dans la première bobine (5) et dépendant de la présence et du niveau du matériau conducteur (3) dans l'enveloppe (1), caractérisé par le fait que chacune des spires de chacun des bobinages disposée dans un plan sensiblement vertical entoure le matériau conducteur contenu dans l'enveloppe (1), quel que soit le niveau de ce matériau dans l'enveloppe (1).

2. Dispositif de détection suivant la revendication 1, caractérisé par le fait que l'enveloppe (1) est une canalisation (1) dans laquelle circule un métal liquide (2).

3. Dispositif de détection suivant la revendication 2, caractérisé par le fait qu'il comporte un moyen d'alimentation (7) en courant alternatif de la première bobine (5) prévu pour fournir un courant à une fréquence définie en fonction des dimensions (diamètre et épaisseur) de l'enveloppe (1) dans sa partie recevant les spires des bobines (5, 6) et inversement proportionnelle à ces dimensions.

4. Dispositif de détection suivant la revendication 3, dans le cas où on effectue la détection du matériau conducteur pour des taux de remplissage de l'enveloppe cylindrique allant 0 à 100 %, caractérisé par le fait que le moyen d'alimentation (7) est prévu pour fournir un courant à une fréquence de 1000 Hertz, lorsque l'enveloppe a un diamètre voisin de 0,270 m et une épaisseur voisine de $4 \cdot 10^{-3}$ m.

5. Dispositif de détection suivant la revendication 3, dans le cas où on effectue la détection du matériau conducteur pour des taux de remplissage de l'enveloppe cylindrique compris entre 0 et 25 % et entre 75 et 100 %, caractérisé par le fait que le moyen d'alimentation (7) est prévu pour fournir un courant à une fréquence de 1600 Hertz, lorsque la tuyauterie a un diamètre voisin de 0,270 m et une épaisseur voisine de 4 · 10$^{-3}$m.

6. Application d'un dispositif selon la revendication 1, caractérisée par le fait que le matériau conducteur est une poudre métallique.

7. Application d'un dispositif selon l'une quelconque des revendications 1 à 5 caractérisée par le fait que le matériau conducteur est un liquide conducteur électrique métallique.

## Patentansprüche

1. Vorrichtung zum Nachweis eines in einer Umhüllung (1) mit einer allgemeinen zylindrischen Gestalt und einer genau horizontalen Achse enthaltenen elektrisch leitenden Materials mittels elektromagnetischer Kopplung zweier leitender Spulen (5, 6), die in einer einzigen Lage um die Außenseite der das leitende Material enthaltenden Umhüllung gewickelt sind, wobei die Windungen einer der Spulen (5) in bezug auf die Windungen der anderen Spule (6) verzahnt und exakt aneinanderstoßend angeordnet sind, und mittels der Messung der über die Anschlußklemmen der zweiten Spule (6) induzierten elektromotorischen Kraft, die von einem Wechselstrom in der ersten Spule (5) erzeugt wird und vom Vorliegen und vom Niveau des leitenden Materials (3) in der Umhüllung (1) abhängt, *dadurch gekennzeichnet,* daß unabhängig vom Niveau des in der Umhüllung (1) enthaltenen leitenden Materials jede der in einer genau vertikalen Ebene angeordneten Windungen einer jeden der Wicklungen das Material in der Umhüllung (1) umgibt.

2. Nachweisvorrichtung gemäß Anspruch 1, *dadurch gekennzeichnet,* daß die Umhüllung (1) eine Rohrleitung (1) ist, in der ein flüssiges Metall (2) fließt.

3. Nachweisvorrichtung gemäß Anspruch 2, *gekennzeichnet* durch eine Wechselstromversorgungseinrichtung (7) für die erste Spule (5), die zur Lieferung eines Stromes vorgesehen ist, der eine Frequenz besitzt, die in Abhängigkeit von den Abmessungen (Durchmesser und Stärke) der Umhüllung (1) in ihrem die Windungen der Spulen (5, 6) aufnehmenden Abschnitt und umgekehrt proportional zu diesen Abmessungen festgelegt wird.

4. Nachweisvorrichtung gemäß Anspruch 3, *dadurch gekennzeichnet,* daß die Versorgungseinrichtung (7) dann, wenn der Nachweis des leitenden Materials bei einer Raumausfüllung der zylindrischen Umhüllung zwischen 0 und 100 % ausgeführt wird, dazu vorgesehen ist, einen Strom mit einer Frequenz von 1000 Hertz zu liefern, falls die Umhüllung einen Durchmesser von ungefähr 0,270 m und eine Stärke von ungefähr 4 x 10$^{-3}$ m aufweist.

5. Nachweisvorrichtung gemäß Anspruch 3, *dadurch gekennzeichnet,* daß die Versorgungseinrichtung (7) dann, wenn der Nachweis des leitenden Materials bei einer Raumausfüllung der zylindrischen Umhüllung zwischen 0 und 25 % und zwischen 75 und 100 % ausgeführt wird, dazu vorgesehen ist, einen Strom mit einer Frequenz von 1600 Hertz zu liefern, falls die Leitung eine Durchmesser von ungefähr 0,270 m und eine Stärke von ungefähr 4 x 10$^{-3}$ m aufweist.

6. Verwendung einer Vorrichtung gemäß Anspruch 1, *dadurch gekennzeichnet,* daß das leitende Material ein metallartiges Pulver ist.

7. Verwendung einer Vorrichtung gemäß einem der Ansprüche 1 bis 5, *dadurch gekennzeichnet,* daß das leitende Material eine elektrisch leitende, metallartige Flüssigkeit ist.

## Claims

1. Apparatus for the detection of an electrically conducting material contained in a casing (1) of generally cylindrical shape and with a substantially horizontal axis, by electromagnetic coupling of two conductor coils (5, 6) wound in a single layer around the outer wall of the casing containing the conductive material, the windings of one of the coils (5) being intermingled with the windings of the other coils (6) and substantially contiguous therewith, and by measurement of the electro motive force induced in the terminals of the second coil (6), created by an alternating current in the first coil (5) and dependent on the presence and level of conductive material (3) in the casing (1), characterised in that each of the windings of each of the coils disposed in a substantially vertical plane surrounds the conductive material contained in the casing (1), irrespective of the level of this material in the casing (1).

2. Detection apparatus according to claim 1, characterised in that the casing (1) is a duct (1) in which a liquid metal (2) circulates.

3. Detection apparatus according to claim 2, characterised in that it comprises means (7) for supplying alternating current to the first coil (5) provided for supplying current at a frequency which is defined as a function of the dimensions (diameter and thickness) of the casing (1) in the part thereof which accommodates the windings of the coils (5, 6) and in inverse proportion to these dimensions.

4. Detection apparatus according to claim 3, for cases where detection of the conductive material is carried out for filling levels of the cylindrical casing ranging from 0 to 100 %, characterised in that the supply means (7) is provided for supplying current at a frequency of 1000 Hertz when the

9

casing has a diameter of about 0.270m and a thickness of about $4 \cdot 10^{-3}$m.

5. Detection apparatus according to claim 3, for cases where detection of the conductive material is carried out for filling levels of the cylindrical casing of between 0 and 25 % and between 75 and 100 %, characterised in that the supply means (7) is provided for supplying current at a frequency of 1600 Hertz when the pipes have a diameter of about 0.270m and a thickness of about $4 \cdot 10^{-3}$m.

6. Application of an apparatus according to claim 1, characterised in that the conductive material is a metal powder.

7. Application of an apparatus according to any one of claims 1 to 5, characterised in that the conductive material is an electrically conductive liquid metal.

FIG. 1

FIG. 2a

FIG. 2b

FIG. 2c